# EUROPÄISCHE PATENTSCHRIFT

(11) **EP 0 657 401 B1**
(45) Veröffentlichungstag und Bekanntmachung des Hinweises auf die Patenterteilung: **29.09.1999**
(21) Anmeldenummer: 94117711.5
(22) Anmeldetag: 10.11.1994
(51) Int. Cl.: C04B 35/532, F16J 15/34, H01R 39/26, C09K 3/10, F16C 33/04

(54) **Kohlenstoff-Graphit-Werkstoff, Verfahren zur Herstellung eines solchen sowie dessen Verwendung**
Carbon-graphite composite material, process for making it and its use
Matériau carbone-graphite, son procedé de fabrication et son utilisation

(30) Priorität: 11.11.1993 DE 4338447
(43) Veröffentlichungstag der Anmeldung: 14.06.1995
(73) Patentinhaber: Schunk Kohlenstofftechnik GmbH, D-35452 Heuchelheim (DE)
(72) Erfinder: Rinn, Günter, D-35633 Lahnau (DE); Sperling, Rainer, D-35444 Bierbertal (DE); Lippert, Hans, D-36341 Lauterbach (DE); Sauer, Karl-Heinz, D-35444 Biebertal (DE)
(74) Vertreter: Stoffregen, Hans-Herbert, Dr. Dipl.-Phys.

(56) Entgegenhaltungen:
- DE-A- 2 234 924
- DE-A- 4 025 367

## Beschreibung

Die Erfindung bezieht sich auf die Verwendung eines Kohlenstoff-Werkstoffs, auf einen Kohlenstoff-Graphit-Werkstoff mit eingelagertem Additiv sowie auf ein Verfahren zur Herstellung eines solchen Materials.

Um Kohlenstoff-Graphit-Werkstoffe herzustellen, unterscheidet man grundsätzlich folgende Verfahren. Zum einen werden Kohlenstoff-Füllstoffe wie Koks, Graphit und Ruß gegebenenfalls mit Additiven versetzt und mit einem Bindemittel wie Pech oder Kunstharz vermischt. Zum anderen dienen selbstsinternde Rohstoffe, sogenannte Mesophasen, die gleichfalls mit Additiven versetzt sein können, als Ausgangsmaterialien.

Bindemittelhaltige Mischungen werden auf eine definierte Korngrößenverteilung gemahlen; bindemittelfreie Rohstoffe werden üblicherweise in der erforderlichen Korngrößenverteilung bezogen. In jedem Fall werden die Mischungen zu Formkörpern verpreßt und diese ausschließlich thermisch behandelt, d.h. ausgehärtet und/oder verkokt und eventuell graphitiert, um gegebenenfalls anschließend mit Metallen oder Kunstharz imprägniert zu werden, wobei das Kunstharz zusätzlich verkokt werden kann. Die Maximaltemparatur in der Fertigung der Kohlenstoff-Graphit-Werkstoffe wird durch die Zersetzungstemperatur der Additive limitiert. Bedingt durch die Zusammensetzung und die Herstellungsverfahren handelt es sich bei den Kohlenstoff-Graphit-Werkstoffen um keramische Werkstoffe, die eine hohe chemische Beständigkeit, Temperaturbeständigkeit, Festigkeit, Härte und Wärmeleitfähigkeit aufweisen. Auch sind diese Werkstoffe durch niedrige Wärmeausdehnungskoeffizienten und hohe Temperaturwechselbeständigkeit gekennzeichnet.

Graphit besitzt aufgrund seiner besonderen Kristallstruktur schmierende Eigenschaften. Reibung und der Verschleiß von Kohlenstoff-Graphit-Werkstoffen hängen jedoch sehr stark von der Rezeptur, der thermischen Behandlung, dem Imprägniermittel und vom Gegenlaufmaterial ab. Auch ist es bekannt, daß anorganische Bestandteile einen erheblichen Einfluß auf Reibung und Verschleiß haben. Allerdings sind tribologisch wirksame Mechanismen nicht eindeutig aufgeklärt.

Quellen für anorganische Bestandteile sind Verunreinigungen in den Kohlenstoffrohstoffen, Abrieb von Mühlen, und der gezielte Einsatz von Additiven als Reibwertmodifikatoren (siehe "The Friction and Wear Properties of Meso-Carbon Microbeads/ Carbon Fibre/Ceramic Composites", Hirohisa Miura et al, Wear of Materials, ASME 1991, Seite 143 ff.).

Aus der DE 40 25 367 A1 ist eine metallgefüllte Kohlebürste für Kleinmotoren bekannt. Um ausschließlich das elektrische Verhalten und die Standzeit der Kohlebürste zu verbessern, ohne daß auf den Abrieb des Gegenmaterials, also z. B. eines Kommutators geachtet wird, ist vorgesehen, daß das Ausgangsmaterial der Kohlebürste mit Karbiden versetzt wird. Der Anteil der Karbide liegt vorzugsweise im Bereich zwischen 1,0 und 15,0 Gewichtsprozent bei einer Partikelgröße von weniger als 50 µm. Als Karbide bzw. Boride gelangen zum Beispiel TiC, WC, TiB₂ zum Einsatz.

Weitere Graphitwerkstoffe, die Karbidzusätze aufweisen, sind der US 4,670,201, EP 0 507 564 A2, US 2,992,901 oder DE 27 27 314 B2 zu entnehmen. Die Karbidzusätze dienen dabei jedoch entweder als Bindemittelersatz, zur Verbesserung der Temperaturbeständigkeit oder als Graphitierungshilfe.

Aus der DE 22 34 924 1 ist ein Verfahren zur Herstellung von Maschinenelementen bekannt. Dabei wird ein Kohlenstoffmaterial vorgeschlagen, das SiC mit einem nicht näher spezifizierten Gewichtsanteil zwischen 0 und 99 % und einer nicht näher spezifizierten Korngröße zwischen 1 und 100 µm enthalten kann. Das vorgeschlagene Material wird inbesondere für Elemente benutzt, die drehende Bewegungen (wie Kupplungen oder Zahnräder) übertragen sollen, d.h. dort, wo eine hohe Haftreibung erforderlich ist. Sofern das entsprechende Material für Gleitringe benutzt wird, soll sichergestellt sein, daß Schmiermittel gut haften.

Der vorliegenden Erfindung liegt die Aufgabe zugrunde, einen Kohlenstoff-Graphit-Werkstoff zur Verfügung zu stellen, der sich durch einen niedrigen Reibungskoeffizienten und einen geringen Verschleiß auszeichnet.

Erfindungsgemäß wird zur Lösung der Aufgabe die Verwendung eines Kohlenstoff-Graphit-Werkstoffs als auch für Trockenlauf bestimmtes Gleitmaterial vorgeschlagen mit einem Additiv in Form von Siliziumnitrid und/oder Borcarbid einer mittleren Korngröße zwischen 0,1 und 10 µm und einem Gewichtsanteil zwischen 3 % und 15 %.

Überraschenderweise hat sich gezeigt, daß durch den Zusatz von ultrafeinem synthetischem Hartstoff aus Siliziumnitrid und/oder Borcarbid vorzugsweise einer mittleren Korngröße zwischen 0,1 bis 2 µm ein Kohlenstoff-Graphit-Werkstoff zur Verfügung gestellt wird, dessen Reibungskoeffizient und Verschleiß reduziert werden konnte. Dies zeigt sich bereits beim Trockenlauf gegen einen weichen, nicht legierten Stahl. Zusätzlich konnte überraschenderweise festgestellt werden, daß es auch nicht zu einem erodierenden Verschleiß des Gegenlaufmaterials kommt. Auch bei Naßlauf und gegen harte Gegenlaufwerkstoffe zeigen erfindungsgemäße Materialien überdurchschnittliche Eigenschaften.

Der Kohlenstoff-Graphit-Werkstoff mit eingelagertem Additiv zeichnet sich dadurch aus, daß das Additiv Siliziumnitrid und/oder Borcarbid mit einer mittleren Korngröße zwischen 0,1 bis 10 µm und einem Gewichtsanteil in dem Kohlenstoff-Graphit-Werkstoff von 3 bis 15 % ist.

Schließlich ist das Verfahren zur Herstellung eines Kohlenstoff-Graphit-Werkstoffs zuvor beschriebener Art, wobei Füllstoffe wie Koks, Graphit und Ruß mit einem oder mehreren Additiven versetzt, mit einem Bindemittel wie Pech und Kunstharz vermischt, die so hergestellte Mischung aufgemahlen und anschließend gepreßt und thermisch behandelt wird, dadurch gekennzeichnet, daß zumindest ein synthetischer Hartstoff in Form von Siliziumnitrid und/oder Borcarbid einer mittleren Korngröße zwischen 0,1 und 10 µm in dem Bindemittel dispergiert und mit den Füllstoffen bei einer Temperatur T mit 200 °C ≤ T ≤ 240 °C vermischt wird und daß die Mischung nach dem Aufmahlen und Pressen bei einer Temperatur von in etwa 1300 °C geglüht wird, wobei die Füllstoffe insgesamt mit einer solchen Menge an in dem Bindemittel dispergierstem synthetischen Hartstoff versetzt werden, daß der Gewichtsanteil des synthetischen Hartstoffs nach der thermischen Behandlung 3 bis 15 Gewichtsprozent des hergestellten Kohlenstoff- und/oder Graphit-Werkstoffs beträgt.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus den nachfolgenden Beispielen.

### Beispiel 1:

Zur Herstellung eines erfindungsgemäß gekennzeichneten Kohlenstoff-Graphit-Werkstoffs gelangen grundsätzlich konventionelle Verfahren zur Anwendung. D.h, daß Füllstoffe wie Koks, Graphit, Ruß und die synthetischen Hartstoffe aus Siliziumnitrid und/oder Borcarbid mit Bindemittel gemischt werden, damit die Füllstoffe gut benetzt werden und sich eine homogene Zusammensetzung ergibt. Sodann erfolgt ein Aufmahlen, um eine homogene Korngröße zu erzielen. Sodann schließt sich ein Pressen und Glühen in inerter oder reduzierender Atmosphäre an.

Um einen erfindungsgemäßen Kohlenstoff-Graphit-Werkstoff herzustellen, der für ein Gleitlager benutzt werden soll, werden Ausgangsmaterialien mit folgenden Gewichtsanteilen verwendet:

| | |
|---|---|
| Koks | 8,5 % |
| Graphit | 35 % |
| Ruß | 15 % |
| Synthetische Hartstoffe | 6,5 % |
| Bindemittel | 35 % |

Die zuvor genannten Materialien wurden sodann bei einer Temperatur T 220°C gemischt. Anschließend wurde die Mischung aufgemahlen, so daß sich eine mittlere Korngröße von 20 µm ergab.

Nach dem Pressen und Glühen bei in etwa 1300 °C in inerter Atmosphäre zeigte der Kohlenstoff-Graphit-Werkstoff folgende Materialeigenschaften:

| | |
|---|---|
| Rohdichte | 1,74 g/cm³ |
| offene Porosität | 9 % |
| Biegefestigkeit | 55 MPa |
| Wärmeleitfähigkeit | 16 W/mK |
| therm. Ausdehnungskoeffizient | 4,5 x 10⁻⁶ K⁻¹ |

Der Reibungskoeffizient eines erfindungsgemäßen Kohlenstoff-Graphit-Werkstoffmaterials weist bei Trockenlauf gegen Stahl einen Reibungskoeffizienten von < 0,2 auf. Ein ähnliches Material, jedoch ohne Hartstoffe, hat dagegen einen Reibungskoeffizienten von 0,3 bis 0,35.

## Patentansprüche

1. Verwendung eines Kohlenstoff-Graphit-Werkstoffs als auch für Trockenlauf bestimmtes Gleitmaterial mit einem Additiv in Form von Siliziumnitrid und/oder Borcarbid einer mittleren Korngröße zwischen 0,1 und 10 µm und einem Gewichtsanteil zwischen 3 und 15 %.

2. Kohlenstoff-Graphit-Werkstoff mit eingelagertem Additiv,
**dadurch gekennzeichnet,**
daß das Additiv Siliziumnitrid und/oder Borcarbid mit einer mittleren Korngröße zwischen 0,1 bis 10 µm und einem Gewichtsanteil in dem Kohlenstoff-Graphit-Werkstoff von 3 bis 15 % ist.

3. Verfahren zur Herstellung eines Kohlenstoff-Graphit-Werkstoffes nach Anspruch 2, wobei Füllstoffe wie Koks, Graphit und Ruß mit einem oder mehreren Additiven versetzt, mit einem Bindemittel wie Pech oder Kunstharz vermischt, die so hergestellte Mischung aufgemahlen und anschließend gepreßt und thermisch behandelt wird,
**dadurch gekennzeichnet,**
daß zumindest ein synthetischer Hartstoff in Form von Siliziumnitrid und/oder Borcarbid einer mittleren Korngröße zwischen 0,1 und 10 µm in dem Bindemittel dispergiert und mit den Füllstoffen bei einer Temperatur T mit 200 °C ≤ T ≤ 240 °C vermischt wird und daß die Mischung nach dem Aufmahlen und Pressen bei einer Temperatur von in etwa 1300 °C geglüht wird, wobei die Füllstoffe insgesamt mit einer solchen Menge an in dem Bindemittel dispergiertem synthetischen Hartstoff versetzt werden, daß der Gewichtsanteil des synthetischen Hartstoffs nach der thermischen Behandlung 3 bis 15 % des Kohlenstoff-Graphit-Werkstoffs beträgt.

## Claims

1. Use of a carbon-graphite material as sliding material that is also intended for dry running with an additive in the form of silicon nitride and/or boron carbide having a mean grain size between 0.1 and 10 µm and a weight content between 3 and 15 %.

2. Carbon-graphite material with embedded additive,
characterised in that
the additive is silicon nitride and/or boron carbide having a mean grain size between 0.1 and 10 µm and a weight content in the carbon-graphite material from 3 to 15 %.

3. Process for producing a carbon-graphite material according to Claim 2, wherein fillers such as coke, graphite and carbon black are added to one or more additives, are mixed with a binding agent such as pitch or synthetic resin, the mixture produced in this way is ground down and is subsequently pressed and thermally treated,
characterised in that
at least one synthetic hard material in the form of silicon nitride and/or boron carbide having a mean grain size between 0.1 and 10 µm is dispersed in the binding agent and mixed with the fillers at a temperature T, where 200 °C ≤ T ≤ 240 °C, and in that, after being ground down and pressed, the mixture is annealed at a temperature of approximately 1,300 °C, whereby the fillers are added as a whole to such a quantity of synthetic hard material dispersed in the binding agent that the weight content of the synthetic hard material amounts after the thermal treatment to 3 to 15 % of the carbon-graphite material.

## Revendications

1. Utilisation d'un matériau carbone-graphite à titre de matériau de glissement conçu également pour un fonctionnement à sec, ayant un additif se présentant sous la forme de nitrure de silicium et/ou de carbure de bore, ayant une taille de grain moyenne comprise entre 0,1 et 10 µm et une proportion en poids comprise 3 et 15 %.

2. Matériau carbone-graphite à additif intégré,
caractérisé en ce que
l'additif qu'est le nitrure de silicium et/ou le carbure de bore est d'une taille de grain moyenne comprise entre 0,1 et 10 µm et d'une proportion en poids dans le matériau carbone-graphite comprise entre 3 à 15 %.

3. Procédé de fabrication d'un matériau carbone-graphite selon la revendication 2,
des charges telles que du coke, du graphite et de la suie étant mélangées avec un ou plusieurs additifs, avec un liant tel que du brai ou une résine synthétique, le mélange ainsi fabriqué étant broyé et ensuite pressé et traité thermiquement,
caractérisé en ce qu'
• au moins une substance dure synthétique, se présentant sous la forme de nitrure de silicium et/ou de carbure de bore, ayant une taille de grain moyenne comprise entre 0,1 et 10 µm, est mise en dispersion dans le liant et mélangée aux charges à une température T de 200°C ≤ T ≤ 240°C, et
• le mélange, après broyage et pressage, est cuit à une température d'environ 1300°C, les charges étant globalement mélangées avec une substance dure synthétique mise en dispersion dans le liant, en une quantité telle que le pourcentage en poids de matière dure synthétique, après traitement thermique, est de 3 à 15 % du matériau carbone-graphite.
